# EUROPEAN PATENT APPLICATION

(11) **EP 4 699 809 A1**
(43) Date of publication of application: **25.02.2026**
(21) Application number: 24195380.1
(22) Date of filing: 20.08.2024
(51) Int. Cl.: B41J 11/00, B41M 7/00, C09D 11/30

(54) **A METHOD OF FORMING AN IMAGE WITH TWO-STEP FIXATION TREATMENT**

(71) Applicant: Canon Production Printing Holding B.V., 5914 HH Venlo (NL)
(72) Inventor: VAN BEEK, Albert M., Venlo (NL); LANDMESSER, Georg, Venlo (NL); VAN DIJKMAN, Thomas F., Venlo (NL)
(74) Representative: Canon Production Printing IP Department

(57) **Abstract**

A method of printing comprising: forming an image (14b) by applying ink onto the surface of a substrate (14), the ink containing a liquid carrier fluid (40), resin particles (42), and pigment particles (44); and subjecting the image (14b) to a fixation treatment, a first fixation treatment step comprising: transporting the substrate (14) with the image (14b) thereon through a confined space (22) delimited by a delimiting surface (24a) opposite to the surface (14a) of the substrate (14); and, inside the confined space (22), heating the image (14b) containing liquid carrier fluid (40) of the applied ink and subjecting the image (14b) to an atmosphere that is saturated with the carrier fluid, thereby causing resin particles (42) and pigment particles (44) in the image (14b) to form a film in the presence of the liquid carrier fluid (40). A second fixation treatment step comprises: drying the image (14b).

## Description

### BACKGROUND OF THE INVENTION

### 1. Field of the invention

The invention relates to a method of printing comprising the steps of:
- forming an image by applying ink onto the surface of a substrate, wherein the ink comprises a liquid carrier fluid, resin particles, and pigment particles; and
- subjecting the image to a fixation treatment.

### 2. Description of the related art

DE 102019126701 A1 describes an infrared dryer module for a printing machine. A housing encloses a process space through which a substrate is moved, the housing having an inlet opening for introducing fresh air into the process space and an outlet opening for the discharge of exhaust air from the process space. The supply air flow is coordinated with the other process variables in such a way that the desired removal of moisture from the substrate takes place.

US 2012/0249703 A1 describes a drying device that dries ink discharged onto a surface of a recording medium and includes a drying conveyor portion and a blower portion. The drying conveyor portion conveys the recording medium. The blower portion blows air toward the recording medium substantially parallel to an ink recording surface of the recording medium being conveyed by the drying conveyor portion.

JP 2005265271 A describes drying a sheet-form compound with microwaves. The sheet-form compound to be dried is heated in receiving the action of an electric field generated in a cavity while the sheet-form compound passes through a cavity resonator. High efficiency drying is conducted owing to quick evaporation of a dissolving agent.

US 2021/0260895 A1 describes a fixer that includes a fixing roller around which a recording medium is directed such that the print image to be fixed faces toward the shell surface of the fixing roller. A fixing gap is generated with a gaseous fixing medium between the shell surface of the fixing roller and the recording medium.

### SUMMARY OF THE INVENTION

It is an object of the invention to provide a method of the type described in the opening paragraph with improved fixation of the image.

The invention is indicated in the independent claims.

In order to achieve the object, in a method according to the invention, the fixation treatment includes a first fixation treatment step that comprises:
transporting the substrate with the image thereon through a confined space that is delimited by a delimiting surface opposite to the surface of the substrate; and,
inside the confined space, heating the image containing liquid carrier fluid of the applied ink and subjecting the image to an atmosphere that is saturated with the carrier fluid, thereby causing resin particles and pigment particles in the image to form a film in the presence of the liquid carrier fluid.

In an embodiment, the fixation treatment includes a second fixation treatment step that comprises:
drying the image.

Thus, by transporting the substrate through the confined space (or: constrained space), evaporation of the carrier fluid is suppressed when the air volume above the applied image is saturated with the carrier fluid. This enables heating (or further heating) to cause the resin particles and pigment particles in the image to form a film in the presence of the liquid carrier fluid. Thus, the film formation is caused by the heating and the subjecting of the image to the saturated atmosphere. In particular, the heating of the image containing liquid carrier fluid of the applied ink may be performed while subjecting the image to an atmosphere that is saturated with the carrier fluid. The image, which still contains liquid carrier fluid that has been applied with the ink, is heated while the image is subjected to the atmosphere that is saturated with the carrier fluid. And, due to this, the resin particles and pigment particles in the image form a film in the presence of the liquid carrier fluid. In particular, the film may be formed on the surface of the substrate. The film formation is controlled in that the film formation occurs in the presence of the liquid carrier fluid, and the presence of the liquid carrier fluid is maintained throughout the applying of the ink and the forming of the film in the first fixation treatment step. In other words, the resin particles and pigment particles are subjected to a liquid carrier fluid environment throughout a process that includes the applying of the ink onto the substrate and the forming of the film in the first fixation treatment step. The presence of the liquid carrier fluid during forming of the film by heating improves the result of the fixation of the image, that is, the fixed image on the substrate. The presence of the liquid carrier fluid throughout the printing and forming of the film by heating may further improve the fixation of the image. The confined space forms a gap between the substrate and the delimiting surface. The confined space ensures that saturation of the atmosphere is quickly and reliably achieved, thereby contributing to a consistency of the film forming. Moreover, the required energy for the fixation may be reduced, and the processing length required for the fixation may be reduced.

By drying the image, the ink is cured. The image is fixed on the substrate. The fixation treatment differs from a conventional fixation of applied ink that is performed by drying the applied ink. Moreover, the process is simplified compared to a process in which the image was first dried and then moistened or wetted again with the liquid carrier fluid. In a conventional fixation process that is performed by drying the ink, the temperature of the liquid ink in the image is limited by evaporative cooling. In particular, the temperature is limited to the (carrier-fluid pertaining) wet-bulb temperature. Per definition, the wet-bulb temperature is the lowest temperature to which air (or here: the atmosphere inside the confined space) can be cooled by the evaporation of the carrier fluid into the air. Here, the term "wet-bulb temperature" refers to the wet-bulb temperature pertaining to the carrier fluid. The wet-bulb temperature depends on the pressure (which in the confined space is equal to the atmospheric pressure outside the confined space), the temperature, and the humidity ("humidity" pertaining to the carrier fluid). In conventional drying of a printed image, when the image is heated to a higher temperature, the carrier fluid has already been evaporated from the image. In contrast to this, according to the invention, the image is heated and is subjected to an atmosphere that is saturated with the carrier fluid, and, in the image, resin particles and pigment particles form a film in the presence of the liquid carrier fluid. Therefore, higher temperatures of the image than the (carrier-fluid pertaining) wet-bulb temperature may be reached, promoting the film formation in the presence of the liquid carrier fluid.

Herein, unless otherwise stated, the term "wet" pertains to the carrier fluid. That is, "wet" may also be termed "carrier-fluid wet". In the case of the carrier fluid being water, this is the usual meaning of "wet".

The substrate enters the confined space through an entrance of the confined space. The atmosphere inside the confined space comprises air and is saturated by the carrier fluid (that is, carrier fluid in its vapor state or gaseous state of matter).

In the first fixation treatment step, the atmosphere (the air volume) in the confined space is saturated with the carrier fluid. In the case of the carrier fluid being water, this corresponds to the atmosphere in the confined space having a relative humidity of 100%.

The forming of the film in the presence of the liquid carrier fluid may comprise a wet sintering of resin particles and pigment particles in the image. In particular, the wet sintering may be caused by the heating while subjecting the image to an atmosphere that is saturated with the carrier fluid. The forming of the film in the presence of the liquid carrier fluid may comprise a capillary compaction of resin particles and pigment particles in the image. In particular, the capillary compaction may be caused by the heating while subjecting the image to an atmosphere that is saturated with the carrier fluid. The forming of the film in the presence of the liquid carrier fluid may comprise at least one of a wet sintering and a capillary compaction of resin particles and pigment particles in the image.

First, the film is formed in the presence of the liquid carrier fluid. Subsequently, the image is dried and cured. Drying the image may comprise heating the image. Drying the image may comprise exhausting carrier fluid from the atmosphere to which the image is subjected. Drying the image may comprise letting the carrier fluid evaporate from the image, in particular, letting the carrier fluid fully or at least partially evaporate from the image. Drying the image may comprise a pre-drying step that may be performed before the substrate enters the confined space. In other words, the second fixation treatment step that comprising drying the image, may be performed before and/or after the first fixation treatment step that comprises transporting the substrate with the image thereon through the confined space.

To each part of the image, the first fixation treatment step and the second fixation treatment step are performed subsequently. The first fixation treatment step and the second fixation treatment step may be performed concurrently on successive parts of the image. In particular, the first fixation treatment step and the second fixation treatment step may be performed in a first fixation treatment area and, respectively, a second fixation treatment area, through which the substrate with the image thereon is transported. The second fixation treatment area is arranged after the first fixation treatment area in the transport direction. For example, the first and second fixation treatment areas may be first and second sections of a fixation treatment area through which the substrate with the image thereon is transported. The confined space may include the first fixation treatment area.

In embodiments, the step of drying the image in the second fixation treatment step may be performed fully or at least partially inside the confined space. That is, the second fixation treatment step may comprise: inside the confined space, at least partially drying the image. In other words, the image is at least partially dried inside the confined space. The confined space may include at least a part of the second fixation treatment area.

The ink which is applied contains said liquid carrier fluid, resin particles, and pigment particles. The ink may further comprise other substances and/or particles, for example, at least one co-solvent.

More specific features of the invention are indicated in the dependent claims and in the following description.

In embodiments, in the first fixation treatment step, evaporation of the carrier fluid from the image is limited by maintaining the atmosphere being saturated with the carrier fluid.

As the carried-fluid saturated atmosphere limits evaporation of the carrier fluid, the image may be heated above that temperature at which there would be an equilibrium of evaporation rate and condensation rate of the carrier fluid, while still maintaining the presence of liquid carrier fluid in the image. Thus, film forming is promoted in the presence of the liquid carrier fluid. In particular, in the first fixation treatment area, the atmosphere may be maintained being saturated with the carrier fluid.

In embodiments, the atmosphere is saturated with the carrier fluid by evaporation of the carrier fluid from the image (and/or from the substrate, e.g., paper) inside the confined space. The contribution of evaporation of the carrier fluid from the substrate may be beneficial in case of low ink coverages. That is, all of the carrier fluid in the atmosphere inside the confined space stems from the applied ink (by evaporation from the image and/or from the substrate). No carrier fluid vapor is added. In other words, carrier fluid vapor (gaseous carrier fluid) is introduced into the confined space only by evaporation from the image. In the case of the carrier fluid being water, this corresponds to no moisture being added.

In particular, the method may comprise evaporating liquid carrier fluid from the image by heating the image, thereby generating said atmosphere that is saturated with the carrier fluid inside the confined space. Thus, energy consumption and complexity of the printing system may be reduced, since there is no need to generate steam and compensate for steam losses. A simpler, more cost efficient and more compact fixation is made possible. The previously mentioned steps of heating the image and subjecting the image to said atmosphere may be steps of, inside the confined space, (further) heating the image containing liquid carrier fluid of the applied ink while subjecting the image to the generated atmosphere that is saturated with the carrier fluid.

However, in other embodiments, carrier fluid vapor may be introduced into the confined space together with the substrate with the image thereon. For example, carrier fluid vapor may be introduced into the confined space by a forced flow, in particular, a forced air flow of air containing carrier fluid vapor.

In embodiments, the image is heated to a temperature that is above a glass transition temperature of the resin particles, in the first fixation treatment step. Thereby, the resin particles become softer and more easily deformable. This promotes film formation in the heated image.

In embodiments, air or gas is actively mechanically introduced into the confined space only by being drawn into the confined space by the transported substrate having the image thereon, except for a suction mechanism configured for sucking the substrate to a moving support for transporting the substrate through the confined space, in the case of such suction mechanism being present. That is, no air or gas is blown into the confined space. The substate with the image thereon may transported through the confined space on the moving support, while the substrate is sucked to the moving transport by the suction mechanism. Thus, the support adheres to the moving support. The moving support may comprise suction holes, the suction holes arranged within a suction width of the moving support (the width in a direction across the transport direction). The moving support may comprise a transport belt or an outside surface of a rotating transport drum. When the suction width is covered by the substrate, the effect of the suction mechanism on the air flow into the confined space may be negligible.

In other embodiments, super-heated carrier fluid in its gaseous state (super-heated carrier fluid steam) may be blown against the surface of the substrate, in the first fixation step. For example, in the confined space and/or at the entrance of the confined space, the super-heated carrier fluid steam may be blown against the surface of the substrate. In particular, the first fixation treatment step may comprise blowing hot gas against the surface of the printed image, at least a portion of the hot gas being constituted by super-heated carrier fluid steam. By blowing the super-heated carrier fluid against the surface of the substrate, the image may be heated. Moreover, the super-heated carrier fluid steam may contribute to saturating the atmosphere with the carrier fluid inside the confined space.

By the delimiting surface, the confined space is confined to a limited height above the surface of the substrate.

Preferably, a distance (gap height h) between the surface of the substrate and the delimiting surface is equal to or less than 20 mm, and preferably equal to or less than 5 mm. Even more preferably, the distance is equal to or less than 3 mm. A distance of 20 mm has been found to allow for a quick saturation of the confined space by the carrier fluid even if the saturation is obtained by evaporation from the image. The smaller the distance, the shorter will be the distance from the entrance of the confined space to a position where the saturated atmosphere is obtained. The space should be large enough to avoid contact with the unfixated image (that is, h > ~1 mm), but small enough for fast saturation (h ≤ ~20 mm).

In embodiments, the carrier fluid is water. Thus, the ink may be an aqueous ink. However, at least one co-solvent may be present in the applied ink.

The ink may be a water-based ink, comprising dispersed resin particles in addition to colorants (e.g., dyes and/or pigments), waxes, (co-)solvents and surfactants. Besides the dispersed resin particles (sometimes termed 'latex (resin) particles') other components such as colorants (in particular pigments) and waxes may be present in the water-based ink as dispersed particles.

The heating can be realized by various technologies, e.g., conduction with the bottom surface or IR radiation (e.g., blackbody, CIR or NIR) from above.

In embodiments, said heating of the image in the first fixation treatment step and/or said drying of the image in the second fixation treatment step includes heating the image by RF heating. This is advantageous in that in RF heating, the direct input of energy can be tuned to be predominantly received by the applied ink in the image, rather than by those parts of the substrate where no ink has been applied. Thereby, heating and/or high temperatures of the substrate and/or of parts of the substrate with no or low coverage of ink may be limited or avoided. Thus, media deformation may be reduced or avoided. Moreover, RF heating is a self-limiting heating, as the RF energy is no longer received by the carrier fluid after evaporation thereof. Thus, cooling requirements for cooling the substrate after fixing the image may be reduced, and the complexity of a printing apparatus may be reduced, and energy consumption is reduced. For example, the RF heating may comprise microwave heating. Moreover, RF heating may be implemented while providing for a closed delimiting surface of the confined space. RF heating allows for both heating and drying/evaporation control.

In embodiments, the delimiting surface has at least one exhaust opening (in particular, a hole) for exhausting carrier fluid vapor from the confined space after a predefined transportation length of the substrate through the confined space. The at least one exhaust opening may be controllable, in particular, depending on measured temperature and/or carrier-fluid humidity. By adding (controlled) openings/exhausts, the temperature profile and evaporation rate can be controlled over the length of the fixation, promoting film formation at high temperature at the start, and evaporation/drying towards the end.

The method may comprise: exhausting carrier fluid vapor from the confined space through the at least one exhaust opening of the delimiting surface. The predefined transportation length may correspond to the first fixation treatment area. In particular, carrier fluid vapor may be exhausted from the confined space after performing the first fixation treatment step on the image over a predefined transportation length of the substrate through the confined space. By arranging for the at least one exhaust opening, the evaporation rate of the carrier fluid may be (for example, passively) controlled. The at least one exhaust opening may be arranged (positioned) at respective positions that correspond to a transition from the first fixation treatment step to the second fixation treatment step. In the second fixation treatment step, during drying the image, the image may be subjected to an atmosphere that is not saturated with the carrier fluid.

For example, the confined space may be delimited by an enclosure or housing that comprises the delimiting surface. The housing may comprise side walls that are arranged at opposite sides of the substrate along the transport direction of the substrate. The housing may be closed apart from an entrance of the confined space and an exit of the confined space and, where applicable, apart from the at least one exhaust opening.

The housing of the enclosure may be set to a defined temperature selected such that condensation of carrier vapor is avoided.

In embodiments, the confined space may be sealed at its entrance and exit sides respectively, to keep the carrier vapor inside of the confined space. Sealing can be obtained by brushes or rollers or other sealing means.

In embodiments, the temperature of the image during the drying of the image in the second fixation treatment step is lower than a temperature to which the image is heated in the first fixation treatment step. The latter temperature may be a temperature at which said film forming takes place in the presence of the liquid carrier fluid. Thus, the drying of the image is performed at temperatures of the image that are lower than said temperature to which the image is heated in the first fixation treatment step. In particular, the film forming may take place at temperatures that are higher than temperatures at which the drying takes place. In particular, the method may comprise: controlling a temperature of the image over the transportation length through the confined space.

### BRIEF DESCRIPTION OF THE DRAWINGS

Embodiments of the invention will now the described in conjunction with the drawings, wherein:
- Fig. 1: is a schematic view of a printing system suitable for carrying out the invention;
- Figs. 2 and 3: are schematic illustrations of film forming in the presence of liquid carrier fluid occurring in a printed image;
- Fig. 4: is a diagram showing results of a simulation of relative humidity in a confined space; and
- Fig. 5: is a schematic view of a printing system suitable for carrying out an embodiment of the invention.

### DETAILED DESCRIPTION OF EMBODIMENTS

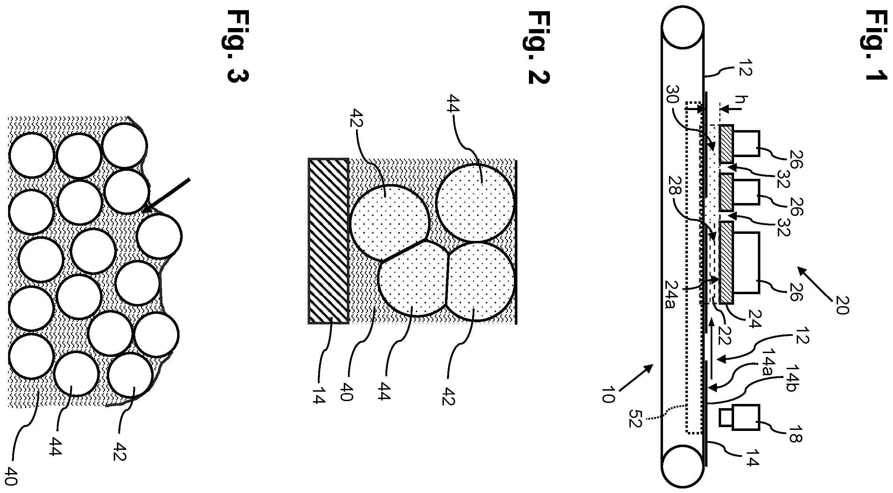

The printing system shown in Fig. 1 comprises a conveyer 10 that constitutes the transport path 12 for sheet-like print substrates 14. An inkjet print engine 18 and a fixation unit 20 are disposed in that order along the transport path 12.

The fixation unit 20 comprises a confined space 22 that is confined to a limited height h above the surface 14a of the respective print substrates 14 by a delimiting surface 24a of a fixation unit wall 24. A heating unit 26 is disposed at the fixing unit 20 for heating printed images 14b on the surface 14a of the print substrate 14 when the print substrate 14 is transported through the confined space 22. The fixation unit wall 24 may be a wall of the heating unit 26.

The print engine 18 comprises a multi-color inkjet print head assembly suitable for forming a printed image on the surface 14a of the substrate 14 by jetting droplets of ink onto the substrate 14. The inks of different colors contain a liquid carrier fluid, resin particles, and pigment particles of different colors. The liquid carrier fluid may for example be water, and the inks may be water-based inks. The resin particles may for example be latex resin particles. For example, the inks may be water-based latex inks.

The substrates 14 with the printed images 14b thereon enter the confined space 22 while the ink on the substrate 14 is still in the liquid state.

Inside the confined space 22, a first fixation area 28 and a second fixation area 30 are disposed in that order in transport direction along the transport path 12.

In the first fixation area 28, inside the confined space 22, the image 14b is heated by the heating unit 26, thereby generating an atmosphere that is saturated with the carrier fluid. While the image is subjected to the atmosphere that is saturated with the carrier fluid, the image is further heated, causing resin particles and pigment particles in the still liquid ink of the image 14b to form a film on the substrate 14. That is, the film is formed in the presence of the liquid carrier fluid. In particular, the image 14b is heated to a temperature that is above the glass transition temperature Tg of the resin particles. For example, in the first fixation area 28, the height h may be about 2-3mm.

After a predefined transportation length of the substrate 14 through the confined space 22, the delimiting surface 24a includes exhaust openings 32. For example, exhaust openings 32 may be disposed at a transition from the first fixation area 28 to the second fixation area 30. For example, exhaust openings 32 may also be disposed at the second fixation area 30.

Through the exhaust openings 32, carrier fluid vapor is exhausted from the confined space 22. Furthermore, the image 14b on the substrate 14 is heated in the second fixation area 30 by the heating unit 26. Thereby, the ink of the image 14b is dried in the second fixation area 30. For example, the temperature of the image 14b in the second fixation area 30 may be lower than the temperature to which the image 14b is heated in the first fixation area 28.

The fixation unit wall 24 defining the confined space 22 may be a perforated plate, i.e., a plate with holes acting as exhaust openings 32. The perforated plate structure with holes not only functions as (passive) exhaust, but also to equalize pressure differences between the ambient and the confined space. This will prevent the suction of the belt (i.e., transport path 12 comprising a perforated belt in combination with suction mechanism 52) to remove the moist atmosphere by a large convective flow. Open areas of example 12% in the top plate (i.e., fixation unit wall 24) will promote a moist environment in the confined space by diffusion, while preventing a high suction flow into the belt.

Fig. 2 schematically illustrates film forming of resin particles 42 and pigment particles 44 in the presence of the liquid carrier fluid (water) 40 in the ink of the image 14b by wet sintering. The resin particles 42, which are softened by the temperature above the glass transition temperature Tg, and the pigment particles 44 are brought together by direct attraction (that is, by reducing surface free energy) between the particles, forming a film on the substrate 14.

Fig. 3 schematically shows film forming due to the effect of capillary compaction by the action of the liquid carrier fluid (water) 40 pulling on the particles 42, 44 through its surface tension. A force of the surface tension is schematically shown as an arrow.

The film formation, in particular through wet sintering and/or capillary compaction, is made possible by the presence of the liquid carrier fluid 40 in the heated image 14b. The presence of the liquid carrier fluid 40 is ensured by the confined space 22 in the first fixation area 28 being quickly saturated with the evaporated carrier fluid, so that enough carrier fluid 40 remains in the liquid state during the film forming.

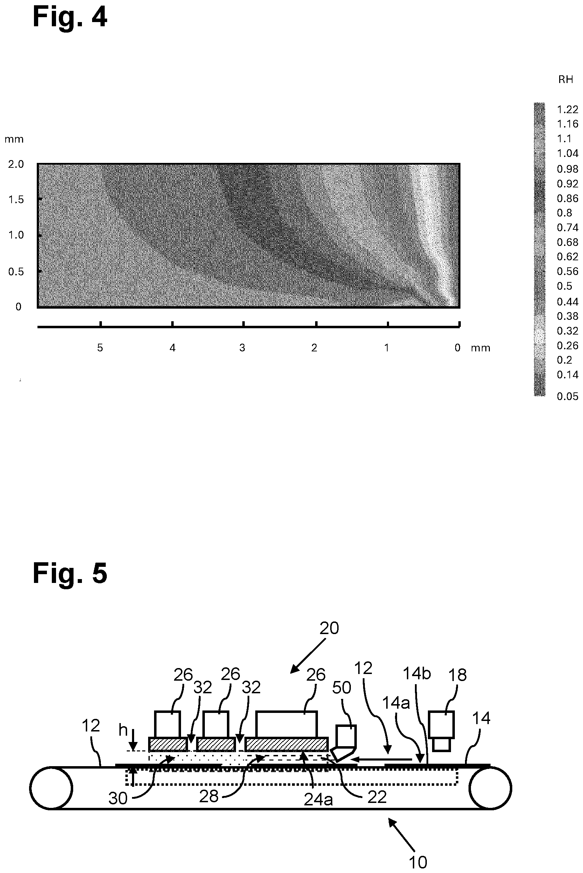

Fig. 4 schematically illustrates a diagram showing simulation results of relative humidity RH in a confined space of a height of 2mm. The height is limited by a plate-shaped delimiting surface 24a at the top, the substrate with the image being at the bottom. In this simulation, a hot sheet (the heated image and substrate) enters the simulated part of the confined space from the right with a speed of 1.2m/s. The simulation shows that within 1mm from the entry, a boundary layer above the image is saturated very quickly (RH = 100%). Furthermore, the full height of the confined space is saturated quickly after 5mm from the entry.

In the above-described embodiments, the heating unit 26 may for example be an RF heating unit, the radiation energy which can be tuned to be selectively absorbed by the ink of the image rather than by the dry parts of the substrate 14. For example, the wall 24 may be formed by electrodes of the RF heating unit. In other embodiments, however, the heating unit 26 may comprise a black body radiator or infrared heater or other heating device. For example, in the second fixation area 30, the heating unit 26 may comprise a hot air impingement drying unit.

Fig. 5 schematically illustrates a further embodiment that is similar to the embodiment of Fig. 1. Only the differences to the embodiment of Fig. 1 are explained in the following. In this embodiment, at the entrance to the confined space 22, additional carrier fluid in its gaseous state is introduced into the confined space 22 by a super-heated steam unit 50. The super-heated steam unit 50 further ensures that the atmosphere in the confined space 22 is quickly saturated with the carrier fluid. Furthermore, the super-heated steam unit 50 may for example heat the image 14b by heat transfer from the introduced super-heated steam of the carrier fluid.

In contrast to this, in the embodiment of Fig. 1, air or gas is actively mechanically introduced into the confined space 22 only by possibly being drawn into the confined space 22 by the transported substrate 14, apart from a possible suction mechanism 52 that sucks the transported substrate 14 to a moving transport such as a transport belt of the conveyer 10 that transports the substrate 14 is along the transport path 12.

In the above embodiments, the confined space 22 and the delimiting surface 24a have a flat configuration above the transport path 12. In other embodiments, the confined space 22 and the delimiting surface 24a may be disposed around an outer surface of a rotating transport drum, for example. Thus, the confined space 22 may be implemented during transport of the substrate over the drum.

In the above embodiments, the confined space 22 includes the first fixation area 28, an optional transition area, and the second fixation area 30. However, the second fixation area 30 may be disposed outside the confined space 22 (after the confined space 22, in the transport direction).

## Claims

1. A method of printing comprising the steps of:
- forming an image (14b) by applying ink onto the surface of a substrate (14), wherein the ink comprises a liquid carrier fluid (40), resin particles (42), and pigment particles (44); and
- subjecting the image (14b) to a fixation treatment,
wherein the fixation treatment includes a first fixation treatment step that comprises:
transporting the substrate (14) with the image (14b) thereon through a confined space (22) that is delimited by a delimiting surface (24a) opposite to the surface (14a) of the substrate (14); and,
inside the confined space (22), heating the image (14b) containing liquid carrier fluid (40) of the applied ink and subjecting the image (14b) to an atmosphere that is saturated with the carrier fluid, thereby causing resin particles (42) and pigment particles (44) in the image (14b) to form a film in the presence of the liquid carrier fluid (40).

2. The method according to claim 1, wherein the fixation treatment includes a second fixation treatment step that comprises:
drying the image (14b).

3. The method according to claim 1 or 2, wherein, in the first fixation treatment step, evaporation of the carrier fluid (40) from the image (14b) is limited by maintaining the atmosphere being saturated with the carrier fluid.

4. The method according to any one of claims 1 - 3, wherein the atmosphere is saturated with the carrier fluid by evaporation of the carrier fluid (40) from the image (14b) inside the confined space (22).

5. The method according to any one of the preceding claims, wherein the image (14b) is heated to a temperature that is above a glass transition temperature of the resin particles (42), in the first fixation treatment step.

6. The method according to any one of the preceding claims, wherein air or gas is actively mechanically introduced into the confined space (22) only by being drawn into the confined space (22) by the transported substrate (14) having the image (14b) thereon, except for a suction mechanism (52) configured for sucking the substrate (14) to a moving support (10) for transporting the substrate (14) through the confined space (22), in the case of such suction mechanism (52) being present.

7. The method according to any one of the preceding claims, wherein a distance (h) between the surface (14a) of the substrate (14) and the delimiting surface (24a) is equal to or less than 20 mm, and preferably equal to or less than 5 mm.

8. The method according to any one of the preceding claims, wherein the carrier fluid (40) is water.

9. The method according to any one of the preceding claims, wherein said heating of the image (14b) in the first fixation treatment step and/or said drying of the image (14b) in the second fixation treatment step includes heating the image (14) by RF heating.

10. The method according to any one of the preceding claims, wherein the delimiting surface (24a) has at least one exhaust opening (32) for exhausting carrier fluid vapor from the confined space (22) after a predefined transportation length of the substrate (14) through the confined space (22).

11. The method according to any one of the preceding claims, wherein the temperature of the image (14b) during the drying of the image (14b) in the second fixation treatment step is lower than a temperature to which the image (14b) is heated in the first fixation treatment step.

12. A printing system comprising a print engine (18) and a fixation unit (20) disposed in that order along a transport path (12) for the print substrates (14), wherein the print engine (18) is configured for forming images (14b) by applying ink onto the surface (14a) of print substrates (14), the ink containing a liquid carrier fluid (40), resin particles (42), and pigment particles (44), wherein the fixation unit (20) comprises a confined space (22) above the transport path (12) , **characterized in that** the fixation unit (20) is configured for subjecting printed images (14b) to a fixation treatment in which the image (14b) containing liquid carrier fluid (40) of the applied ink is first heated and subjected to an atmosphere that is saturated with the carrier fluid inside the confined space (22), thereby causing resin particles (42) and pigment particles (44) in the image (14b) to form a film in the presence of the liquid carrier fluid (40), and the image (14b) is then dried.
